# EUROPEAN PATENT APPLICATION

(11) **EP 4 632 873 A2**
(43) Date of publication of application: **15.10.2025**
(21) Application number: 25164059.5
(22) Date of filing: 17.03.2025
(51) Int. Cl.: H01M 10/54, H01M 10/0525, H01M 4/139

(54) **METHOD OF MANUFACTURING POSITIVE ELECTRODE ACTIVE MATERIAL FOR RECHARGEABLE LITHIUM BATTERY AND RECHARGEABLE LITHIUM BATTERY**

(30) Priority: 27.03.2024 KR 20240041605
(71) Applicant: SAMSUNG SDI CO., LTD., Yongin-si, Gyeonggi-do 17084 (KR)
(72) Inventor: LEE, Youngjun, Yongin-si, Gyeonggi-do 17084 (KR); SON, Jongsung, Yongin-si, Gyeonggi-do 17084 (KR); SOHN, Myungbeom, Yongin-si, Gyeonggi-do 17084 (KR); YOO, Kwangyong, Yongin-si, Gyeonggi-do 17084 (KR); PARK, Seongin, Yongin-si, Gyeonggi-do 17084 (KR); YOU, Yongchan, Yongin-si, Gyeonggi-do 17084 (KR)
(74) Representative: Marks & Clerk LLP

(57) **Abstract**

A method of manufacturing a positive electrode active material comprises a first grinding step of grinding a positive electrode scrap of a lithium battery. The ground positive electrode scrap is heat treated. The heat treated positive electrode scrap is ground, and a current collector component and an active material component are separated from the heat treated and ground positive electrode scrap. A solvent is used to wash the separated active material component, solid is separated from liquid, and the solid is dried. With the method, positive electrode active material may be effectively recovered from a positive electrode scrap produced during the fabrication of a rechargeable lithium battery.

## Description

### BACKGROUND

The present disclosure relates to a method of manufacturing a positive electrode active material for a rechargeable lithium battery and a rechargeable lithium battery fabricated by using the same, and more particularly, to a method of manufacturing a positive electrode active material in which method a positive electrode scrap is used and a rechargeable lithium battery fabricated by using the positive electrode scrap.

Rechargeable lithium batteries are widely used as power sources for communication and information devices such as cell phones, laptop computers, and digital cameras due to their high operating voltage, excellent charge/discharge cycles, and adaptability to compactness. As such, demands for rechargeable lithium batteries are rapidly increasing in line with the potential for commercialization of electric vehicles.

Accordingly, there is a significant increase in the amount of positive electrode scrap (positive electrode current collector coated with a positive electrode active material layer) generated during the production of rechargeable lithium batteries. The positive electrode scrap is a material with very high recycling value due to it containing a large amount of valuable metals such as lithium, cobalt, nickel, and manganese.

Since significant economic benefits are expected when the valuable metals are recycled, research is being actively conducted on methods for recovering the valuable metals.

### SUMMARY

An embodiment of the present disclosure provides a method of recycling and reusing a positive electrode active material from a positive electrode scrap.

An embodiment of the present disclosure provides a rechargeable lithium battery including a recovered positive electrode active material.

According to an embodiment of the present disclosure, a method of manufacturing a positive electrode active material comprises: a first grinding step of grinding a positive electrode scrap of a lithium battery; heat treating the ground positive electrode scrap; a second grinding step of grinding the heat treated positive electrode scrap; separating a current collector component and an active material component from the positive electrode scrap that was ground in the first and second grinding steps and heat treated in the heat treating step; washing the separated active material component with a solvent; separating the washed separated active material component into solid and liquid; and drying the solid.

According to an embodiment of the present disclosure, a method of manufacturing a positive electrode active material comprises: a first grinding step of grinding a positive electrode scrap of a lithium battery; heat treating the ground positive electrode scrap at a temperature of about 400 °C to about 600 °C; a second grinding step of grinding the ground and heat treated positive electrode scrap; and separating a current collector component and an active material component from the positive electrode scrap that was ground in the first and second grinding steps and heat treated in the heat treating step.

According to an embodiment of the present disclosure, a rechargeable lithium battery comprises: a positive electrode that includes the positive electrode active material fabricated in one of the methods discussed above; a negative electrode that includes a negative electrode active material; and an electrolyte. An amount of aluminium in the positive electrode active material may be in a range of about 0.001 wt% to about 3 wt%.

### BRIEF DESCRIPTION OF DRAWINGS

FIG. 1 illustrates a simplified conceptual diagram showing a rechargeable lithium battery according to an embodiment of the present disclosure.
FIGS. 2 to 5 illustrate simplified diagrams showing a rechargeable lithium battery according to an embodiment of the present disclosure.
FIG. 6 illustrates a flow chart showing a method of manufacturing a positive electrode active material according to an embodiment of the present disclosure.
FIG. 7 illustrates a flow chart showing a method of manufacturing a positive electrode active material according to another embodiment of the present disclosure.
FIG. 8 illustrates a graph showing lifetime retention rates of rechargeable lithium batteries fabricated according to an Embodiment and a Comparative Example.
FIG. 9 illustrates a graph showing measured results of capacities of rechargeable lithium batteries fabricated according to an Embodiment and a Comparative Example.

### DETAILED DESCRIPTION OF EMBODIMENTS

In order to sufficiently understand the configuration and effect of the present disclosure, some embodiments of the present disclosure will be described with reference to the accompanying drawings. It should be noted, however, that the present disclosure is not limited to the following embodiments and may be implemented in various forms. Rather, the embodiments are provided only to let those skilled in the art understand the full scope of the present disclosure.

In this description, it will be understood that, when an element is referred to as being on another element, the element can be directly on the other element or intervening elements may be present between therebetween. In the drawings, thicknesses of some components are exaggerated for effectively explaining the technical contents. Like reference numerals refer to like elements throughout the specification.

Some embodiments detailed in this description will be discussed with reference to sectional and/or plan views as example views of the present disclosure. In the drawings, thicknesses of layers and regions are exaggerated for effectively explaining the technical contents. Accordingly, regions illustrated in the drawings have general properties, and shapes of regions illustrated in the drawings are used to disclose specific example shapes but not limited to the scope of the present disclosure. It will be understood that, although the terms "first", "second", "third", etc. may be used herein to describe various elements, these elements should not be limited by these terms. These terms are only used to distinguish one element from another element. The embodiments explained and illustrated herein include complementary embodiments thereof.

The terminology used herein is for the purpose of describing particular embodiments only and is not intended to limit the present disclosure. As used herein, the singular forms are intended to include the plural forms as well. The terms 'comprises/includes' and/or 'comprising/including' used in the specification do not exclude the presence or addition of one or more other components.

In this invention, an average particle diameter D50 refers to the average diameter of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. D50 may be measured by a particle size analyzer using a laser diffraction method for the particles.

The present disclosure relates to a rechargeable lithium battery utilizing a method of manufacturing a positive electrode active material for a rechargeable lithium battery in which method a positive electrode scrap for the lithium battery is used.

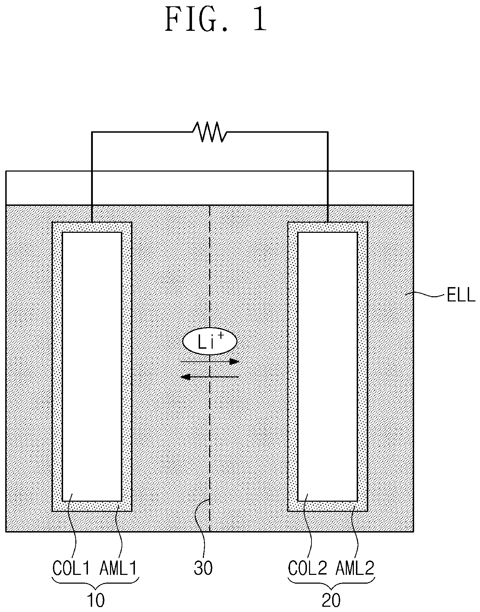

FIG. 1 illustrates a simplified conceptual diagram showing a rechargeable lithium battery according to an embodiment of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced apart from each other across the separator 30. The separator 30 may be disposed between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one of the positive electrode 10 and the negative electrode 20.

### Positive Electrode 10

The positive electrode 10 for the rechargeable lithium battery may include a current collector COL1 and a positive electrode active material layer AML1 formed on the current collector COL1. The positive electrode active material layer AML1 may include a positive electrode active material and further include a binder and/or a conductive material. Aluminium (Al) may be used as the current collector COL1, but the present disclosure is not limited thereto.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

The negative electrode active material layer AML2 may include a negative electrode active material of about 90 wt% to about 99 wt%, a binder of about 0.5 wt% to about 5 wt%, and a conductive material of about 0 wt% to about 5 wt%.

The binder may serve to improve attachment of negative electrode active material particles to each other and also to improve attachment of the negative electrode active material to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include styrene-butadiene rubber, (meth)acrylated styrene-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is used as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include Na, K, or Li.

The dry binder may include a fibrillizable polymer material, for example, polytetrafluoroethylene, polyvinylidene fluoride, polyvinylidene fluoride-hexafluoropropylene copolymer, polyethylene oxide, or a combination thereof.

The conductive material may be used to provide an electrode with conductivity, and any suitable conductive material that does not cause chemical change in the battery may be used as the conductive material. For example, the conductive material may include a carbon-based material such as natural graphite, artificial graphite, carbon black, acetylene black, Ketjen black, carbon fiber, carbon nano-fiber, and carbon nano-tube; a metal powder or metal fiber including one or more of copper, nickel, aluminium, and silver; a conductive polymer such as a polyphenylene derivative; or a mixture thereof.

The current collector COL2 may include a copper foil, a nickel foil, a stainless-steel foil, a titanium foil, a nickel foam, a copper foam, a polymer substrate coated with a conductive metal, or a combination thereof.

### Negative Electrode Active Material

The negative electrode active material in the negative electrode active material layer AML2 may include a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. The crystalline carbon may include graphite such as non-shaped, sheet-shaped, flake-shaped, sphere-shaped, or fiber-shaped natural or artificial graphite, and the amorphous carbon may include soft carbon, hard carbon, mesophase pitch carbon, or calcined coke.

The lithium metal alloy may include an alloy of lithium and metal that is selected from Na, K, Rb, Cs, Fr, Be, Mg, Ca, Sr, Si, Sb, Pb, In, Zn, Ba, Ra, Ge, Al, and Sn.

The material that can dope and de-dope lithium may include a Si-based negative electrode active material or a Sn-based negative electrode active material. The Si-based negative electrode active material may include silicon, silicon-carbon composite, SiOₓ (where 0<x<2), Si-Q alloy (where Q is alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include Sn, SnO₂, a Sn-based alloy, a combination thereof.

The silicon-carbon composite may be a composite of silicon and amorphous carbon. According to an embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and, for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles and may also include an amorphous carbon coating layer positioned on a surface of the core.

The Si-based negative electrode active material or the Sn-based negative electrode active material may be used in combination with a carbon-based negative electrode active material.

### Separator 30

Based on type of the rechargeable lithium battery, the separator 30 may be present between positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate and a coating layer positioned on one or opposite surfaces of the porous substrate, wherein the coating layer may include an organic material, an inorganic material, or a combination thereof.

The porous substrate may be a polymer layer including one selected from polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be a copolymer or mixture including two or more of the materials mentioned above.

The organic material may include a polyvinylidenefluoride-based copolymer or a (meth)acrylic copolymer.

The inorganic material may include an inorganic particle selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, or a combination thereof, but the present disclosure is not limited thereto.

The organic material and the inorganic material may be present mixed in one coating layer or may be present as a stack of a coating layer including the organic material and a coating layer including the inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of a battery.

The non-aqueous organic solvent may include a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, or caprolactone.

The ether-based solvent may include dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The aprotic solvent may include nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be used alone or in a mixture of two or more substances.

In addition, when a carbonate-based solvent is used, a cyclic carbonate and a chain carbonate may be mixed and used, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery and plays a role in enabling a basic operation of a rechargeable lithium battery and in promoting the movement of lithium ions between positive and negative electrodes. The lithium salt may include, for example, at least one selected from LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

### Rechargeable Lithium Battery

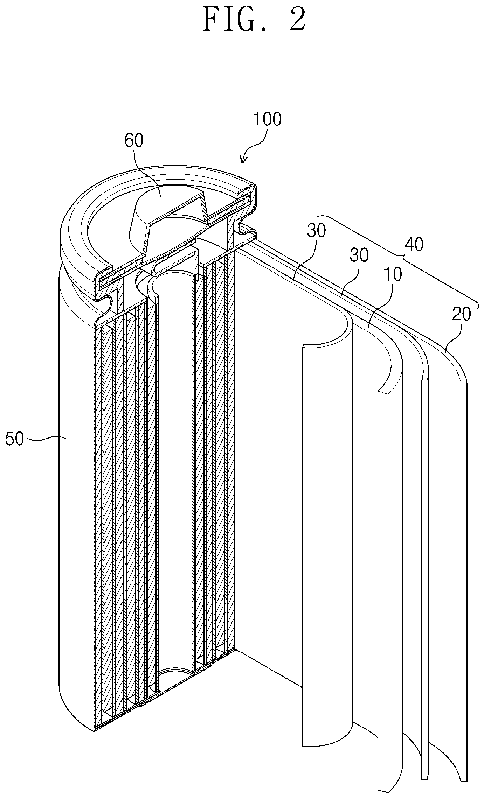

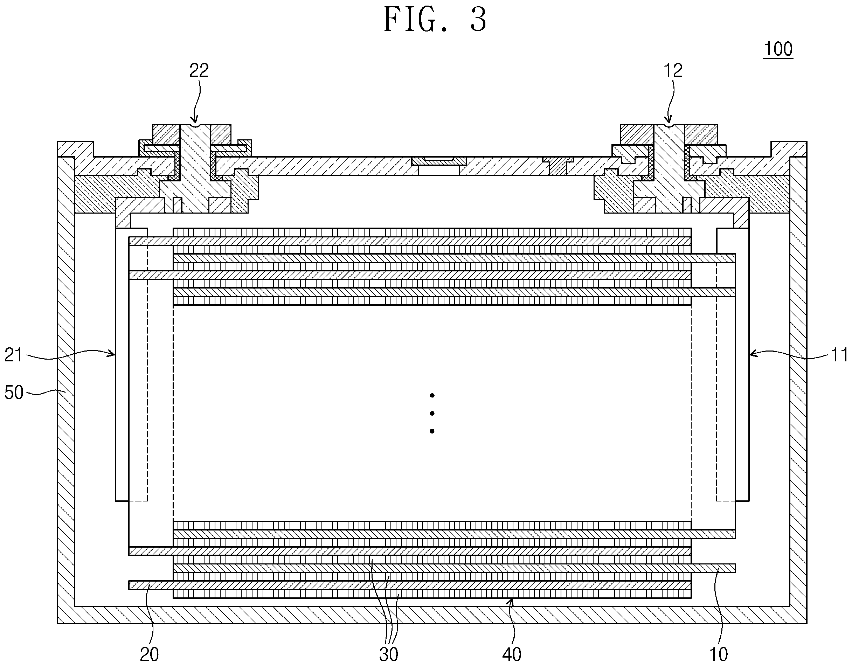

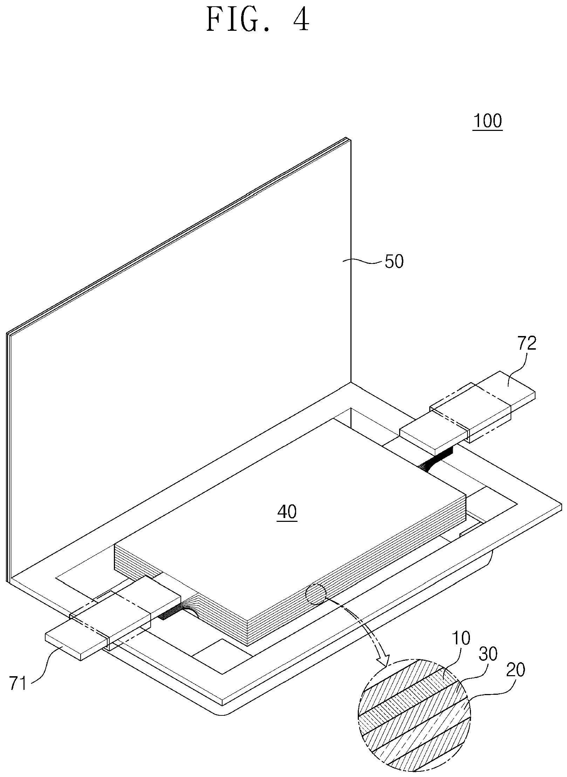

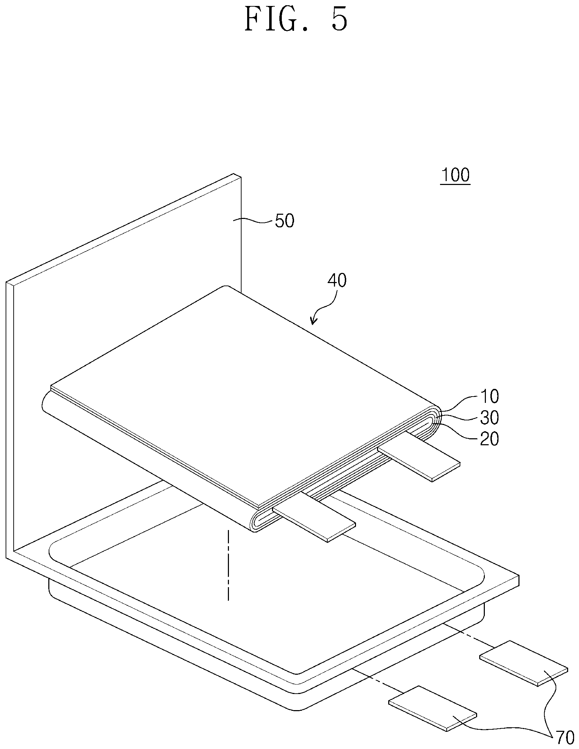

Based on the shape of a rechargeable lithium battery, the rechargeable lithium battery may be classified into cylindrical, prismatic, pouch, and coin types. In FIGS. 2 to 5 illustrating simplified diagrams showing a rechargeable lithium battery according to an embodiment, FIG. 2 shows a cylindrical battery, FIG. 3 shows a prismatic battery, and FIGS. 4 and 5 show pouch-type batteries. Referring to FIGS. 2 to 5, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte (not shown). The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, which electrode tab 70 serves as an electrical path for externally inducing a current generated in the electrode assembly 40.

A rechargeable lithium battery according to an embodiment of the present disclosure may be used in automotive vehicles, mobile phones, and/or any other electrical devices, but the present disclosure is not limited thereto.

### Manufacture of Positive Electrode Active Material

The present disclosure relates to a method of manufacturing a positive electrode active material for a rechargeable lithium battery wherein the methods uses a positive electrode scrap for the lithium battery.

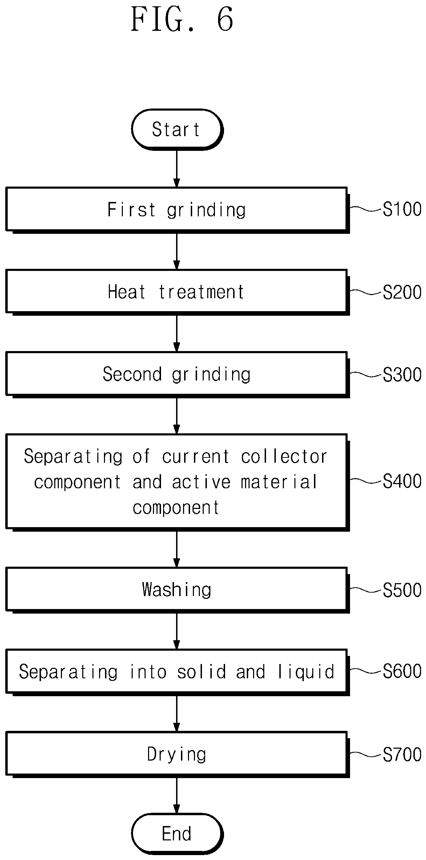

FIG. 6 illustrates a flow chart showing a method of manufacturing a positive electrode active material according to an embodiment of the present disclosure. With reference to FIG. 6, the following will describe in detail a method of manufacturing a positive electrode active material according to an embodiment of the present disclosure.

Referring to FIG. 6, a method of manufacturing a positive electrode active material according to an embodiment of the present disclosure includes performing a first grinding step performed on a positive electrode scrap of lithium batteries (S100), heat treatment of a first grinding result (S200), a second grinding step performed on the heat treatment result (S300), separating a current collector component and an active material component from a second grinding result (S400), allowing a solvent to receive and wash the separated active material component (S500), separating a washing result into solid and liquid (S600), and drying the solid (S700).

The first grinding step S100 may include grinding a positive electrode scrap into appropriate or target sizes.

The positive electrode scrap may be residues that remain after punching in a process of fabricating a positive electrode sheet including a positive electrode active material layer on a current collector. In addition, the positive electrode scrap may be prepared by collecting positive electrodes in which defects occurred during their manufacturing process. Additionally, the positive electrode scrap may be prepared by separating positive electrodes from discarded rechargeable lithium batteries.

In an embodiment involving the production of a positive electrode sheet, a slurry may be prepared by adding and mixing N-methyl-2-pyrrolidone (NMP) to an active material, carbon black as a conductive material, and polyvinylidene fluoride (PVdF) as a binder. The active material may include, for example, a lithium-cobalt oxide such as LiCoO₂ (LCO), NCA containing nickel, cobalt, and aluminium, or NCM containing nickel, cobalt, and manganese. The slurry may be coated on an aluminium current collector. The current collector coated with the slurry may be dried in a vacuum oven at about 120 °C to prepare a positive electrode sheet. The positive electrode sheet may be punched into a positive electrode plate with a certain size, and a remainder (or waste portion) of the positive sheet may be used as the positive electrode scrap.

An active material layer of the positive electrode scrap may be formed from the slurry in which the active material, the conductive material, the binder, and the solvent are mixed. The solvent in the slurry may be volatilized, and the binder may bond the active material and the conductive material. When the binder is removed from the active material layer, the active material may be separated from the current collector.

A method of separating an active material from a positive electrode scrap according to a comparative example of the present disclosure may only include a physical grinding and a classification process. In the physical grinding process according to a comparative example, the binder may not be completely removed such that there is a reduced recovery rate of the positive electrode active material. For example, in the case of a positive electrode plate with high mixture density, the recovery rate of products may significantly decrease when processed by methods of comparative examples.

In a method of separating an active material from a positive electrode scrap according to an embodiment of the present disclosure, a pretreatment step may be additionally included to maximize a recovery rate of positive electrode active materials. The pretreatment step may be performed to effectively separate a current collector and a positive electrode active material of a positive electrode plate with high mixture density, thereby increasing a recovery rate of the positive electrode active material.

In an embodiment, the positive electrode scrap may have a mixture density of about 2 g/cc to about 4 g/cc.

The first grinding step may use at least one selected from a cut crusher, a shear, a pin mill, an impact mill, a ball mill, and a bead mill. The first grinding step may be performed twice or more.

In an embodiment, a cut crusher may be used to perform the first grinding step, and the cut crusher may grind the positive electrode scrap into a size equal to or less than about 1 cm. In the first grinding step, the separation of an active material layer and a current collector may be possible to some extent due to a difference in brittleness and/or ductility between the active material layer and the current collector.

The first grinding step may cut the positive electrode scrap into an appropriate size with horizontal and vertical lengths in a range from about 0.1 cm to about 1 cm. Such sizes may facilitate an effective heat treatment in a subsequent heat treatment process S200. The first grinding result may have an average size of about 0.1 cm to about 1 cm and be in the form of powder.

The heat treatment step S200 may include thermally treating the first grinding result. The heat treatment step S200 may correspond to the pretreatment step discussed above according to some embodiments of the present disclosure.

The heat treatment process according to some embodiments of the present disclosure may be performed to thermally decompose the conductive material and the binder combined with the active material. The heat treatment may cause the binder and the conductive material in the active material to be thermally decomposed into CO₂ and H₂O that are removed. As the binder is removed, recovery-target aggregated active materials in the form of powder may be disentangled and screened. The heat treatment may remove a residual organic material including the binder combined with the active material, and, thus, there may be a reduction in adhesive force between the active material and the binder.

The heat treatment may be performed at about 400 °C to about 600 °C. When the heat treatment is performed at a temperature of less than about 400°C, it may be difficult to remove the binder in the grinding result. When the heat treatment is performed at a temperature of greater than about 600°C, the heat treatment may be carried out above a melting point of the current collector, which may hinder the separation between the positive electrode active material and the current collector.

The heat treatment may be performed for a time, ranging from about 30 minutes to about 3 hours, which is sufficient for complete thermal decomposition of the binder. When the heat treatment is performed for less than about 30 minutes, incomplete thermal decomposition may occur.

In an embodiment, a heat treatment apparatus may be various types of furnaces. For example, the heat treatment apparatus may be a box-type furnace, and in consideration of productivity, may be a rotary kiln capable of continuous treatment.

The heat treatment may be performed under vacuum or gaseous environment such as nitrogen, helium, and/or argon.

The second grinding step S300 may include grinding the heat treatment result into fine particle sizes. The second grinding step may use at least one selected from a cut crusher, a shear, a pin mill, an impact mill, a ball mill, and a bead mill. The second grinding may be performed twice or more. In an embodiment, the second grinding step may be performed by an impact mill, and the impact mill may grind the positive electrode scrap into powder form equal with particle sizes of less than about 3 mm. The second grinding step may be a process in which the heat treatment result is cut into fine particles having an average particle size of about 1 mm to about 3 mm.

In the present disclosure, the heat treatment process may be performed to reduce an adhesive force between the active material and the binder and then the second grinding process may be performed to effectively increase a recovery rate of the positive electrode active material.

The separation step S400 may include classifying a current collector component and an active material component from the second grinding result. The active material component may have an average particle diameter (D₅₀) of about 1 µm to about 20 µm.

The classification process may use a sieve. In the classification process, the active material component of the second grinding result may pass through the sieve to drop downwards, and the current collector component of the second grinding result may not pass through the sieve. Thus, the active material component and the current collector may be separated from each other. In an embodiment, a screen opening of the sieve may have a size ranging from about 100 mesh to about 1,000 mesh.

The washing step S500 may include adding the separated active material component to a solvent and using an ultrasonic generator to wash the active material component. In the washing step S500, vibration may be induced on a surface of the active material component to remove a residual organic material having fine particles attached to the active material component. In an embodiment, an ultrasonic oscillator of the ultrasonic generator may use a bolt-clamped Langevin-type transducer (BLT), where an ultrasonic wave has a frequency of about 40 kHz and intensity of about 50 W to about 3,000 W. In an embodiment, the ultrasonic treatment may be performed for about 10 seconds to about 100 seconds.

The solvent may include one of water, N-methyl-2-pyrrolidone (NMP), isopropanol (IPA), dimethyl sulfoxide (DMSO), dimethylformamide (DMF), N-cyclohexyl-2-pyrrolidone (CHP), ethanol, methanol, acetone, chlorobenzene, and dichlorobenzene. The solvent may include a solvent having a Hansen solubility parameter value that is equal to or greater than that of polyvinylidene fluoride (PVDF). In an embodiment, a solvent having a Hansen solubility parameter value of 2 to 3 may be used.

The separation step S600 may be performed by using specific gravity sorting or magnetic sorting.

The separation process may separate the current collector component and the active material component. According to an embodiment, the washing result may undergo a centrifugal separation for about 1 minute to about 20 minutes at about 1,000 rpm to about 5,000 rpm to separate solid and liquid.

The separated liquid may be collected to reuse as a solvent in the washing process.

In the solid drying step S700, the solid separated in the separation process may be thermally treated to eventually recover the positive electrode active material. The dry process may be performed at a temperature of about 120 °C to about 180 °C. In addition, the drying process may be performed for about 2 hours to about 24 hours, but the present disclosure is not limited thereto.

The resulting dried solid may be provided in the form of powder. The power may essentially contain metal such as Co, Ni, Mn, and Li and may contain a minor quantity of carbon and impurities such as Al, Fe, and Cu.

The dried solid may include the current collector component, and the amount of the current collector component in the dried solid may range from about 0.001 wt% to about 3 wt%. The dried solid may have an average particle diameter (D₅₀) of about 1 µm to about 20 µm. The current collector component in the dried solid may have an average particle diameter (D₅₀) of about 1 µm to about 20 µm. In an embodiment, the current collector component may include aluminium.

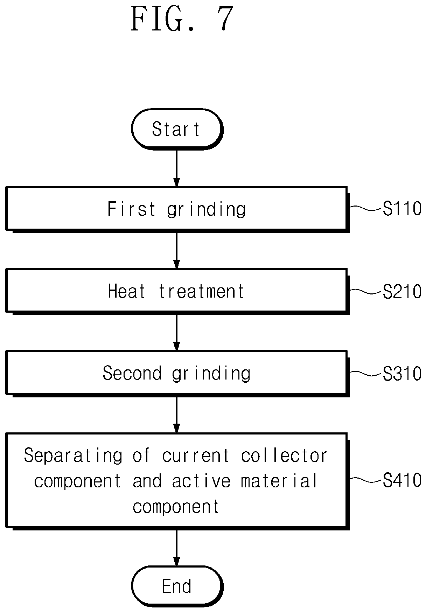

FIG. 7 illustrates a flow chart showing a method of manufacturing a positive electrode active material according to another embodiment of the present disclosure. With reference to FIG. 7, a following description will focus on the method of manufacturing a positive electrode active material according to another embodiment of the present disclosure.

A method of manufacturing a positive electrode active material according to another embodiment of the present disclosure includes performing a first grinding step on a positive electrode scrap of lithium batteries (S110), performing a heat treatment on a first grinding result at a temperature of about 400 °C to about 600 °C (S210), performing a second grinding step on a heat treatment result (S310), and separating a current collector component and an active material component from a second grinding result (S410).

In the embodiment that follows, a detailed description of technical features repetitive to those discussed above with reference to FIG. 6 will be omitted, while differences will be discussed in detail. The method of manufacturing a positive electrode active material according to another embodiment of the present disclosure may have the same configuration as that of the method of manufacturing a positive electrode active material according to an embodiment of the present disclosure including the first grinding step S100, the heat treatment step S200, the second grinding step S300, and the separation step S400.

In the heat treatment step S210 in the method of manufacturing a positive electrode active material according to another embodiment of the present disclosure, the first grinding result is thermally treated at a temperature of about 400 °C to about 600 °C. When the heat treatment is performed at a temperature of less than about 400°C, it may be difficult to remove the binder in the grinding result. When the heat treatment is performed at a temperature of greater than about 600 °C, the heat treatment may be carried out above a melting point of the current collector, which may hinder the separation between the positive electrode active material and the current collector. The heat treatment may be performed for a time, ranging from about 30 minutes to about 3 hours, sufficient for complete thermal decomposition of the binder. When the heat treatment is performed for less than about 30 minutes, incomplete thermal decomposition may occur.

In an embodiment, a heat treatment apparatus may be a furnace in various shapes. For example, the heat treatment apparatus may be a box-type furnace, and in consideration of productivity, may be a rotary kiln capable of continuous treatment.

The heat treatment may be performed under vacuum or gaseous environment such as nitrogen, helium, and/or argon.

The method of manufacturing a positive electrode active material according to another embodiment of the present disclosure may be different from the method of fabricating a positive electrode active material in that there are no additional processes performed after the step S410 of separating the current collector component and the active material component.

A rechargeable lithium battery according to another embodiment of the present disclosure may include a positive electrode active material obtained by the manufacturing method.

A rechargeable lithium battery according to another embodiment of the present disclosure may include a positive electrode including a positive electrode active material obtained by the manufacturing method, a negative electrode including a negative electrode active material, and an electrolyte.

A method of fabricating a rechargeable lithium battery may be as follows. The positive electrode active material obtained by the manufacturing method may be used alone or mixed with a fresh active material to be recycled when the positive electrode is manufactured.

In an embodiment, the positive electrode active material obtained by the manufacturing method, a conductive material, and a binder may be mixed and added to a solvent such as N-methyl-2-pyrrolidone (NMP), and then mixed to prepare a positive electrode slurry. The prepared positive electrode slurry may be coated and dried on a current collector, thereby being manufactured as a positive electrode for recycling. Eventually, a separator may be interposed between the recycled positive electrode and the negative electrode, and an electrolyte may be introduced to fabricate a rechargeable lithium battery.

The following description will focus on some embodiments of the present disclosure. the embodiments discussed below are merely to aid in understanding the present disclosure, and it should be understood that the scope of the present disclosure is not limited thereto.

A positive electrode active material was manufactured by Embodiments and Comparative Examples below.

### Embodiment 1

A nickel-cobalt-aluminium (NCA) positive electrode scrap produced during the fabrication of a rechargeable lithium battery was collected, and then a cut crusher was used to perform a first grinding process on the collected scrap. A size of the crushed material after the first grinding process was equal to or less than about 1 cm in both width and length. The positive electrode scrap was an electrode plate in which a positive electrode active material was roll-pressed on an aluminium current collector, and a mixture density of the electrode plate was about 3.0 to about 4.0.

The crushed material after the first grinding process was thermally treated for 2 hours at 500 °C under vacuum condition.

An impact mill was used to perform a second grinding process on the thermally treated crushed material.

An average particle diameter (D₅₀) of the crushed material after the second grinding process was equal to or less than about 3 mm.

The crushed material after the second grinding process was passed through a 500-mesh sieve to separate a positive elective active material component from a current collector component to thereby recover the positive electrode active material from the positive electrode scrap.

### Embodiment 2

A powder of the positive electrode active material recovered in Embodiment 1 was added to a reactor containing an N-methyl-2-pyrrolidone (NMP) solvent, and then an ultrasonic process was performed for 10 seconds. Afterwards, the ultrasonic result was added to a centrifugal machine, and then a centrifugal separation was performed for 3 minutes at 2,000 rpm.

A supernatant liquid was decanted from the centrifugal separation result, and a settled powder of the positive electrode active material was dried for 4 hours at a temperature of 150 °C to eventually recover the positive electrode active material from the positive electrode scrap.

### Embodiment 3 (Reference Embodiment)

The powder of the positive electrode active material was recovered identically to Embodiment 1, except that no second grinding process was performed.

The following describes a method of recovering a positive electrode active material according to Embodiment 3.

A nickel-cobalt-aluminium (NCA) positive electrode scrap produced during the fabrication of a rechargeable lithium battery was collected, and then a cut crusher was used to perform a first grinding process. A size of the crushed material after the first grinding process was equal to or less than about 1 cm in both width and length.

The crushed material after the first grinding was thermally treated for 2 hours at 500 °C under vacuum condition.

The crushed material after the thermal treatment process was passed through a 500-mesh sieve to separate a positive elective active material component from a current collector component to thereby recover the positive electrode active material from the positive electrode scrap.

### Embodiment 4 (Reference Embodiment)

The powder of the positive electrode active material was recovered identically to Embodiment 3, except that the thermal process was performed at a temperature of 400 °C.

### Embodiment 5 (Reference Embodiment)

The powder of the positive electrode active material was recovered identically to Embodiment 3, except that the thermal process was performed at a temperature of 450 °C.

### Comparative Example 1

The powder of the positive electrode active material was recovered identically to Embodiment 1, except that neither the heat treatment process nor the second grinding process was performed.

The following describes a method of recovering a positive electrode active material according to Comparative Example 1.

A nickel-cobalt-aluminium (NCA) positive electrode scrap produced during the fabrication of a rechargeable lithium battery was collected, and then a cut crusher was used to perform a first grinding process. A size of the crushed material after the first grinding process was equal to or less than about 1 cm in both width and length. The positive electrode scrap was an electrode plate in which a positive electrode active material was roll-pressed on an aluminium current collector, and a mixture density of the electrode plate was about 3.0 to about 4.0.

The crushed material after the first grinding process was passed through a 500-mesh sieve to separate a positive elective active material component from a current collector component to thereby recover the positive electrode active material from the positive electrode scrap.

### Evaluation Example 1: Recovery Rate

A total weight of the collected positive electrode scrap was measured before performing a process to recover the positive electrode active material from the positive electrodes scrap. In addition, the positive electrode scrap was measured to obtain each of the weights of the positive electrode active material, the conductive material, the binder, and the aluminium current collector included therein. The weight of the aluminium current collector was obtained by multiplying an area of the positive electrode scrap by a density of the aluminium current collector.

Amounts of the active materials recovered in Embodiments 1 to 5 and Comparative Example 1 were measured, and recovery rates were calculated and listed in Table 1 below. The recovery rate (E) was calculated according to Equation 1 below. Recovery rate (E) = (amount of recovered active material / amount of active material included in positive electrode scrap before recovery process) × 100 (%)

**[Table 1]**

| Lot | Condition | Recovery rate (%) |
|---|---|---|
| Embodiment 1 | 1^{st} grinding, Heat treatment at 500 °C, 2^{nd} grinding | 98 |
| Embodiment 2 | 1^{st} grinding, Heat treatment at 500 °C, 2^{nd} grinding, Ultrasonic washing | 99 |
| Embodiment 3 | 1^{st} grinding, Heat treatment at 500 °C | 93 |
| Embodiment 4 | 1^{st} grinding, Heat treatment at 400 °C | 80 |
| Embodiment 5 | 1^{st} grinding, Heat treatment at 450 °C | 84 |
| Comparative Example 1 | 1^{st} grinding | 78 |

Referring to Table 1, it was ascertained that the recovery rate was greater in Embodiments 1 to 5 where the first grinding process was followed by the heat treatment process performed at a temperature ranging from 400 °C to 600 °C than in Comparative Example 1.

In the present disclosure, when the heat treatment process is performed at a temperature of 700 °C or higher, because the aluminium current collector has a melting point of 660.3°C, a current collector component may be melted and incorporated into the positive electrode active material. Thus, when the heat treatment process is performed at a temperature of 700 °C or higher, the current collector in the recovered positive electrode active material may have an amount greater than those of Embodiments 1 to 5. This may adversely affect electrochemical properties. Accordingly, in the present disclosure, the heat treatment process may be performed at a temperature of equal to or less than about 600 °C.

In addition, in the active materials of Embodiments 1 and 2, where the heat treatment process was followed by the second grinding process, a higher recovery rate of the active materials was achieved as compared to any of the other Embodiments. In particular, it was ascertained that the recovery rate of the active material was highest in Embodiment 2 where the second grinding process was followed by the ultrasonic process.

### Evaluation Example 2: Component and Particle Size of Recovered Positive Electrode Active Material

To ascertain characteristics of the powder of the positive electrode active material recovered in Embodiment 2, a field emission scanning electron microscope (FE-SEM) and scanning electron microscope with energy dispersive X-ray spectroscopy (SEM-EDX) were used to perform component analysis and particle size measurement.

It was ascertained that the positive electrode active material recovered in Embodiment 2 contained aluminium and carbon each having an amount of 3 wt% or less relative to 100 wt% of the positive electrode active material. In addition, the positive electrode active material recovered in Embodiment 2 was measured to have an average particle diameter (D₅₀) of equal to or less than about 20 µm.

### Evaluation Example 3: Battery Characteristics

A rechargeable lithium battery was fabricated using the positive electrode active material recovered in Embodiment 2. 94 wt% of the positive electrode active material of Embodiment 2, 3 wt% of a polyvinylidene fluoride binder, and 3 wt% of a carbon-black conductive material were mixed in an N-methyl-2-pyrrolidone (NMP) solvent to prepare a positive electrode active material slurry. An aluminium current collector having a thickness of 15 µm was coated with the positive electrode active material slurry whose amount reached 15 mg per cm² of the current collector, and then dried and roll-pressed to manufacture a nickel-cobalt-aluminium (NCA) positive electrode.

A 2032-type coin cell was manufactured using the positive electrode and a lithium metal counter electrode. A separator (having a thickness of about 16 µm) formed of a porous polyethylene (PE) film was interposed between the positive electrode and the lithium metal counter electrode, and an electrolyte was introduced to fabricate a rechargeable lithium battery. 1.3M LiPF₆ was mixed with a solvent including ethylene carbonate (EC), ethyl methyl carbonate (EMC), and dimethyl carbonate (DMC) mixed in a volume ratio of 3:4:3, and the mixture was used as the electrolyte.

A rechargeable lithium battery (2016-type coin cell) according to a Comparative Example was fabricated using the same composition and the manufacturing process, except that unused fresh nickel-cobalt-aluminium (NCA) positive electrode active material was used instead of the recycled positive electrode active material.

The electrochemical performance of the rechargeable lithium batteries was evaluated that were fabricated according to the Embodiment and the Comparative Example.

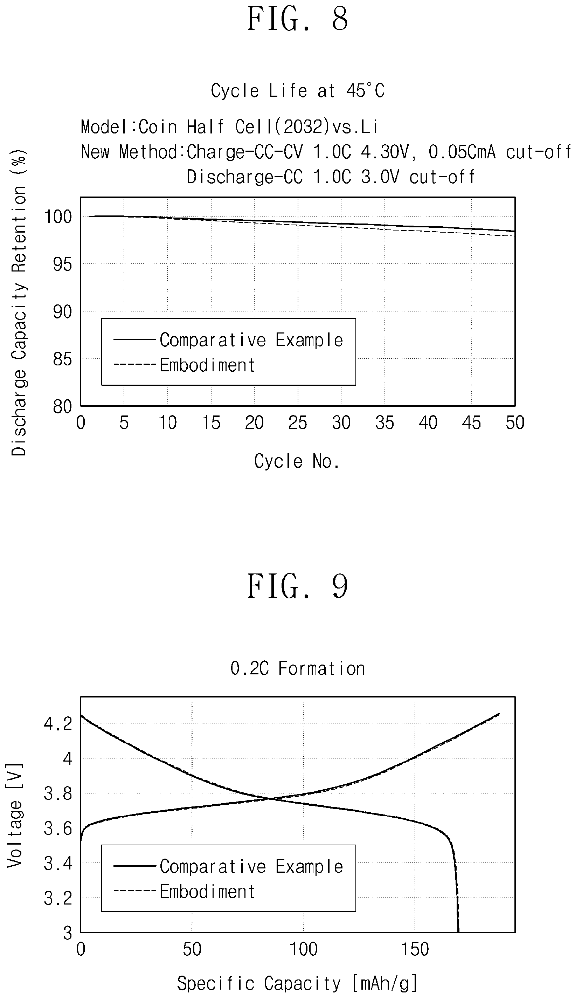

Each of the rechargeable lithium batteries was initially charged at 25 °C under conditions of constant current (0.2 C) and constant voltage (4.3 V), and after resting for 10 minutes, the rechargeable lithium batteries were initially discharged under conditions of constant current (0.2 C) until a voltage reached 3.0 V. Afterwards, charging and discharging were repeated 50 times at 45 °C under 1.0 C/1.0 C conditions. Table 2 below and FIGS. 8 and 9 list results of electrochemical performance evaluation.

FIG. 8 is a graph showing lifetime retention rates of rechargeable lithium batteries fabricated according to the Embodiment and the Comparative Example.

FIG. 9 is a graph showing measured results of capacities of rechargeable lithium batteries fabricated according to the Embodiment and the Comparative Example.

**[Table 2]**

| | Capacity (0.2C) | Lifetime retention rate (50 cycle) |
|---|---|---|
| Comparative Example (fresh NCA) | 169.3 mAh/g | 98.3 % |
| Embodiment (recycled NCA) | 169.4 mAh/g | 97.9 % |

Referring to Table 2 and FIGS. 8 and 9, it may be ascertained that the Comparative Example and the Embodiment exhibit equivalent performance results in terms of capacity and lifetime retention rate.

In a method of manufacturing a positive electrode active material according to the present disclosure, the positive electrode active material may be effectively recovered from a positive electrode scrap produced during the fabrication of a rechargeable lithium battery.

Although some embodiments of the present disclosure have been discussed with reference to accompanying figures, it will be understood that various changes in form and details may be made therein without departing from the scope of the present disclosure. It therefore will be understood that the embodiments described above are just illustrative but not limitative in all aspects.

## Claims

1. A method of manufacturing a positive electrode active material, the method comprising:
a first grinding step of grinding a positive electrode scrap of a lithium battery;
heat treating the ground positive electrode scrap;
a second grinding step of grinding the heat treated positive electrode scrap;
separating a current collector component and an active material component from the positive electrode scrap that was ground in the first and second grinding steps and heat treated in the heat treating step;
washing the separated active material component with a solvent;
separating the washed separated active material component into solid and liquid; and
drying the solid.

2. The method of claim 1, wherein each of the first grinding step and the second grinding step uses at least one selected from a cut crusher, a shear, a pin mill, an impact mill, a ball mill, and a bead mill.

3. The method of claim 1 or claim 2, wherein the positive electrode scrap after the first grinding step has an average size of about 0.1 cm to about 1 cm.

4. The method of any one of claims 1 to 3, wherein the heat treatment is performed at about 400 °C to about 600 °C for about 30 minutes to about 3 hours under vacuum condition.

5. The method of any one of claims 1 to 4, wherein the positive electrode scrap after the second grinding step has an average particle diameter of about 1 mm to about 3 mm.

6. The method of any one of claims 1 to 5, wherein separating the current collector component and the active material component includes the use of a sieve having a screen size in a range of about 100 mesh to about 1,000 mesh.

7. The method of any one of claims 1 to 6, wherein the current collector component includes aluminium, and an amount of aluminium in the dried solid is in a range of about 0.001 wt% to about 3 wt%.

8. The method of claim 7, wherein the positive electrode active material in the dried solid has an average particle diameter (D₅₀) of about 1 µm to about 20 µm.

9. The method of any one of claims 1 to 8, wherein washing the separated active material component includes performing an ultrasonic treatment for about 10 seconds to about 100 seconds.

10. The method of any one of claims 1 to 9, wherein the solvent includes at least one of water, N-methyl-2-pyrrolidone (NMP), isopropanol (IPA), dimethyl sulfoxide (DMSO), dimethylformamide (DMF), N-cyclohexyl-2-pyrrolidone (CHP), ethanol, methanol, acetone, chlorobenzene, and dichlorobenzene.

11. The method of any one of claims 1 to 10, wherein separating the solid and the liquid includes performing a centrifugal separation for 1 minute to about 20 minutes at about 1,000 rpm to about 5,000 rpm.

12. The method of any one of claims 1 to 11, wherein drying the solid is performed for about 2 hours to about 24 hours at about 120 °C to about 180 °C.

13. A method of manufacturing a positive electrode active material, the method comprising:
a first grinding step of grinding a positive electrode scrap of a lithium battery;
heat treating the positive electrode scrap at a temperature of about 400 °C to about 600 °C;
a second grinding step of grinding the heat treated positive electrode scrap; and
separating a current collector component and an active material component from the positive electrode scrap that was ground in the first and second grinding steps and heat treated in the heat treating step.

14. The method of claim 13, wherein each of the first grinding step and the second grinding step uses at least one selected from a cut crusher, a shear, a pin mill, an impact mill, a ball mill, and a bead mill.

15. The method of claim 13 or claim 14, wherein the positive electrode scrap after the first grinding step has an average size of about 0.1 cm to about 1 cm.
